# EUROPÄISCHE PATENTSCHRIFT

(11) **EP 1 209 182 B1**
(45) Veröffentlichungstag und Bekanntmachung des Hinweises auf die Patenterteilung: **30.03.2005**
(21) Anmeldenummer: 01127526.0
(22) Anmeldetag: 17.11.2001
(51) Int. Cl.: C08G 18/42, C08G 18/67, C09D 175/16

(54) **UV-härtbare Pulverlackzusammensetzungen**
UV curable powder coating compositions
Revêtements en poudre réticulable sous uv

(30) Priorität: 25.11.2000 DE 10058617
(43) Veröffentlichungstag der Anmeldung: 29.05.2002
(73) Patentinhaber: Degussa AG, 40474 Düsseldorf (DE)
(72) Erfinder: Spyrou, Emmanouil, Dr., 45772 Marl (DE); Wenning, Andreas, Dr., 48301 Nottuln (DE); Franzmann, Giselher, Dr., 58453 Witten (DE)

(56) Entgegenhaltungen:
- EP-A- 0 924 234
- US-A- 4 552 932
- US-A- 5 639 560

## Beschreibung

Die Erfindung betrifft UV-härtbare Pulverlackzusammensetzungen, die zu hochglänzenden, licht- und wetterstabilen Lackfilmen vernetzen.

Thermisch vernetzbare Pulverlacke sind bekannt und werden in der lackverarbeitenden Industrie häufig verwendet.

So beschreibt z. B. die DE-PS 27 35 497 PUR-Pulverlacke mit hervorragender Witterungsund Wärmestabilität. Die Vernetzer, deren Herstellung in der DE-PS 27 12 931 beschrieben wird, bestehen aus ε-Caprolactam blockiertem Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170 °C erforderlich.

Beide Nachteile, Emission von Blockierungsmittel und Aushärtung bei hohen Temperaturen, können ausgeräumt werden durch Pulverlacke, die nicht thermisch, sondern durch Strahlung ausgehärtet werden, sogenannte UV-Pulverlacke. Derartige UV-Pulverlacke sind bekannt und z.B. in USP 3,485,732, EP-A-0 407 826 und USP 5,639,560 beschrieben.

Das US-Patent 5,639,560 beschreibt UV-härtbare Pulverzusammensetzungen mit speziellen kristallinen Polyestern, die außerdem Methacrylendgruppen aufweisen, als Bindemittel. Fakultativ enthalten diese Pulverzusammensetzungen ethylenisch ungesättigte Oligomere, u.a. Urethanacrylate, in untergeordneten Mengen, bevorzugt bis zu 10 Gewichtsprozent. Die in diesem Patent vorgestellten UV-Pulverlackformulierungen haben aber wesentliche Nachteile. Sie sind nur bei minus 80°C mahlbar und in der Regel sind die daraus resultierenden Beschichtungen entweder nicht außenwetterstabil oder nicht flexibel. Besonders gravierend ist der Nachteil einer sehr geringen Pendelhärte (nach König) von unter 120s.

Aufgabe der vorliegenden Erfindung war es, UV-Pulverlackzusammensetzung zu finden, die lagerstabil bei 35°C sind und außerdem nach der Aushärtung der Lackfilme zu gleichzeitig harten wie flexiblen und außenwetterstabilen Beschichtungen führen. Außerdem sollen die Pulverlacke mit wenig oder ohne Kühlmittel mahlbar sein.

Überraschend konnte diese Aufgabe durch eine strahlenhärtbare Pulverlackzusammensetzung gelöst werden, die als Bindemittel eine Mischung aus mindestens einem amorphen Urethanacrylat und mindestens einem kristallinen Urethanacrylat, mit einem Glasübergangspunkt (Tg) der Mischung von mindestens 35°C, enthält.

Gegenstand der Erfindung sind UV-härtbare Pulverlackzusammensetzungen enthaltend
I. ein Bindemittel bestehend aus
   A) 60 - 90 Gew.-% mindestens eines amorphen Urethanacrylats und
   B) 10 - 40 Gew.-% mindestens eines kristallinen Urethanacrylats,
   wobei der Tg der Mischung aus A und B mindestens 35°C beträgt; und
II. Hilfs- und Zusatzstoffe.

Urethanacrylate im Sinne dieser Erfindung bestehen aus einem hydroxylgruppenhaltigen Polyester, an den durch Umsetzung mit Polyisocyanaten und acrylathaltigen Alkoholen Urethangruppen und Acrylatgruppen angebunden werden.

A. Die erfindungsgemäßen amorphen Urethanacrylate werden aus amorphen hydroxylgruppenhaltigen Polyestern (A1) mit einem Tg von 35 - 80°C durch Umsetzung mit Polyisocyanaten (A2) und einer Verbindung, die gleichzeitig mindestens eine Alkoholgruppe und mindestens eine polymerisationsfähige Acrylatgruppe (A3) enthält, hergestellt. Sie weisen ebenso Urethangruppen wie endständige Acrylatgruppen auf.

A1. Amorphe hydroxylgruppenhaltigen Polyester mit einem Tg von 35 - 80°C werden hergestellt durch Polykondensation von geeigneten Dicarbonsäuren und Diolen. Die Kondensation erfolgt auf an sich bekannte Weise in einer Inertgas-Atmosphäre bei Temperaturen von 100 bis 260°C, vorzugsweise 130 bis 220°C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist. Die für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutarsäure bzw. - soweit zugänglich - deren Anhydride, Terephthalsäuredimethylester, Terephthalsäure-bis-glykolester. Besonders gut geeignet ist Isophthalsäure.

Als Polyole kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methylpropandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, infrage. Bevorzugt sind Monoethylenglykol, Neopentylglykol, Dicidol, Cyclohexandimethanol, Trimethylolpropan und Glycerin.

So hergestellte amorphe Polyester haben eine OH-Zahl von 15 - 100 mg KOH/g, einen Tg von 35 - 80°C und eine Säurezahl von <5. Es können auch Gemische von amorphen Polyestern eingesetzt werden. Es ist zu berücksichtigen, dass bestimmte Ausgangsstoffe, die bekanntermaßen abträglich für die Außenwetterstabilität sind (z.B. Terephthalsäure), nicht oder nur in geringen Mengen verwendet werden dürfen.

A2. In den erfindungsgemäßen amorphen Urethanacrylaten werden als Polyisocyanate Diisocyanate aliphatischer, (cyclo)aliphatischer oder cycloaliphatischen Struktur eingesetzt. Repräsentative Beispiele der Polyisocyanate sind 2-Methylpentamethylen-1,5-diisocyanat, Hexamethylendiisocyanat, Trimethylhexamethylen-1,6-diisocyanat, insbesondere das 2,2,4- und das 2,4,4-Isomere und technische Gemische beider Isomere, 4,4'-Methylenbis(cyclohexylisocyanat), Norbomandiisocyanat, und 3,3,5-Trimethyl-1-isocyanato-3-isocyanatomethylcyclohexan (IPDI). Ebenfalls gut geeignet sind auch Polyisocyanate, die durch Umsetzung von Polyisocyanaten mit sich selbst über Isocyanatgruppen erhältlich sind, wie Isocyanurate, die durch Reaktion dreier Isocyanatgruppen entstehen. Die Polyisocyanate können ebenfalls Biuret- oder Allophanatgruppen enthalten. Besonders gut geeignet ist IPDI.

A3. Als polymerisationsfähige Verbindungen mit mindestens einer freien OH-Gruppe und einer polymerisationsfähigen Acrylatgruppe kommen z.B. Hydroxyethylacrylat (HEA), Hydroxypropylacrylat und Glycerindiacrylat in Frage. Besonders gut geeignet ist Hydroxyethylacrylat (HEA).

Zur Herstellung des amorphen Urethanacrylats A aus den amorphen OH-haltigen Polyestern (A1), Polyisocyanaten A2 und A3 wird zunächst das Polyisocyanat vorgelegt, mit DBTL als Katalysator und IONOL CP (Shell) als Polymerisationsinhibitor versetzt und in einem Verhältnis NCO:OH von 2,5 - 1,5:1 der Polyester zugegeben. Nach beendeter Zugabe wird die Reaktion bei 100 - 140°C vervollständigt. Danach wird zum Reaktionsprodukt die Komponente A3, z.B. Hydroxyethylacrylat im Verhältnis Rest-NCO:OH von 1,0 - 1,1:1 gegeben und die Reaktion bei 80 - 140°C vervollständigt, so dass ein NCO-Gehalt unter 0,1% erreicht wird. Auch möglich ist eine Vorreaktion eines Polyisocyanats, z.B. IPDI, mit der Komponente A3 und die Zugabe dieses NCO-haltigen Vorproduktes zum hydroxylgruppenhaltigen Polyester.

B. Die erfindungsgemäßen kristallinen Urethanacrylate werden durch Umsetzung von kristallinen hydroxylgruppenhaltigen Polyestern (B1) mit Polyisocyanaten (B2) und einer Komponente A3 hergestellt. Besonders gut geeignet als A3 ist Hydroxyethylacrylat (HEA). Sie weisen ebenso Urethangruppen wie endständige Acrylatgruppen auf.

B1. Kristalline hydroxylgruppenhaltigen Polyester werden hergestellt durch Polykondensation wie schon unter A1 für amorphe Polyester beschrieben. Dazu wird eine Säurekomponente, bestehend aus 80-100 Molprozent einer gesättigten linearen aliphatischen oder cycloaliphatischen Dicarbonsäure mit 4-14 Kohlenstoffatomen und 0-20 Molprozent einer anderen aliphatischen oder cycloaliphatischen oder aromatischen Di- oder Polycarbonsäure, mit einer Alkoholkomponente, bestehend aus 80-100 Molprozent eines linearen aliphatischen Diols mit 2-15 Kohlenstoffatomen und 0-20% eines anderen aliphatischen oder cycloaliphatischen Di- oder Polyols mit 2-15 Kohlenstoffatomen, umgesetzt. Die so hergestellten kristallinen hydroxylgruppenhaltigen Polyester haben eine OH-Zahl von 15-80 mg KOH/g, eine Säurezahl <5 mg KOH/g und einen Schmelzpunkt von 40-130°C.

Für die Herstellung von kristallinen Polyestern bevorzugte Carbonsäuren sind Bernstein-, Adipin-, Kork-, Azelain, Sebacin-, Dodecandi-, Tetrahydrophthal-, Hexahydrophthal-, Hexahydroterephthal-, Endomethylentetrahydrophthal-, Glutarsäure bzw. - soweit zugänglich - deren Anhydride. Besonders gut geeignet ist Dodecandisäure.

Als Polyole sind die folgenden Diole Ethylenglykol, Propandiol-(1,2) und -(1,3), 2,2-Dimethylpropandiol-(1,3), Butandiol-(1,4), Pentandiol-(1,5), Hexandiol-(1,6), 2-Methylpentandiol-(1,5), 2,2,4-Trimethylhexandiol-(1,6), 2,4,4-Trimethylhexandiol-(1,6), Heptandiol-(1,7), Decandiol-(1,10), Dodecandiol-(1,12), Octadecen-9,10-diol-(1,12), Octadecandiol-(1,18), 2,4-Dimethyl-2-propylheptandiol-(1,3), Butendiol-(1,4), Butindiol-(1,4), Diethylenglykol, Triethylenglykol, Tetraethylenglykol, trans- und cis-1,4-Cyclohexandimethanol, die Triole Glycerin, Hexantriol-(1,2,6), 1,1,1-Trimethylolpropan und 1,1,1-Trimethylolethan und das Tetraol Pentaerythrit, geeignet.

B2. Bevorzugt werden zur Herstellung der erfindungsgemäßen kristallinen Urethanacrylate als Polyisocyanate Diisocyanate aliphatischer, (cyclo)aliphatischer oder cycloaliphatischen Struktur eingesetzt. Repräsentative Beispiele der Polyisocyanate sind 2-Methylpentamethylen-1,5-diisocyanat, Hexamethylendiisocyanat, Trimethylhexamethylen-1,6-diisocyanat, insbesondere das 2,2,4- und das 2,4,4-Isomere und technische Gemische beider Isomere, 4,4'-Methylen-bis(cyclohexylisocyanat), Norbomandiisocyanat und 3,3,5-Trimethyl-1-isocyanato-3-isocyanatomethylcyclohexan (IPDI). Ebenfalls gut geeignet sind auch Polyisocyanate, die durch Umsetzung von Polyisocyanaten mit sich selbst über Isocyanatgruppen erhältlich sind, wie Isocyanurate, die durch Reaktion dreier Isocyanatgruppen entstehen. Die Polyisocyanate können ebenfalls Biuret- oder Allophanatgruppen enthalten. Besonders gut geeignet ist IPDI.

B3. Die polymerisationsfähigen Verbindungen sind identisch mit der Komponente A3.

Zur Herstellung der erfindungsgemäßen Urethanacrylate B aus kristallinen OH-haltigen Polyestern (B1), Polyisocyanaten (B2) und B3 wird zunächst das Polyisocyanat vorgelegt, mit DBTL als Katalysator und IONOL CP (Shell) als Polymerisationsinhibitor versetzt und in einem Verhältnis NCO:OH von 2,5 - 1,5:1 der Polyester zugegeben. Nach beendeter Zugabe wird die Reaktion bei 70 - 130°C vervollständigt. Danach wird zum Reaktionsprodukt die Komponente B3, z.B. Hydroxyethylacrylat, im Verhältnis Rest-NCO:OH von 1,0-1,1:1 gegeben und die Reaktion bei 70 - 130°C vervollständigt, so dass ein NCO-Gehalt von unter 0,1 % erreicht wird.

Amorphe und kristalline Urethanacrylate werden in einem Verhältnis von amorph zu kristallin von 60 : 40 bis 90 : 10 Gew.-% gemischt, so dass das Endprodukt einen Tg von mindestens 35°C aufweist. Es ist auch möglich, die amorphen und kristallinen Ausgangspolyester zu mischen und diese dann in Mischung mit Polyisocyanaten und acrylathaltigen Alkoholen umzusetzen.

Als weitere erforderliche Einsatzstoffe werden UV-Initatoren verwendet, die prinzipiell bekannt sind aus herkömmlichen flüssigen UV-härtenden Systemen, z.B. EP 633912. Dies sind Stoffe, die bei Bestrahlung mit UV-Licht in Radikale zerfallen und damit die Polymerisation starten. Als UV-Initiatoren kommen in Frage z.B. 2,2'-Diethoxyacetophenon, Hydroxycyclohexylphenylketon, Benzophenon, 2-Hydroxy-2-methyl-1-phenylpropan-1-on, Xanthon, Thioxanthon, Benzildimethylketal, usw. Solche UV-Initiatoren werden kommerziell angeboten, z.B. IRGACURE 184 oder DEGACURE 1173 von Ciba. Der Anteil des Photoinitiators am Gesamtsystem beträgt etwa 0,5 bis 5 Gew.-%.

Optionale Zusatzstoffe sind acrylat- oder methacrylathaltige Verbindungen, wie z. B. das Triacrylat von Tris(2-hydroxyethyl)isocyanurat (SR 386, Sartomer), und Haftvermittler, die in untergeordneten Anteilen von 0 - 20 Gew.-% eingesetzt werden können, um die Beschichtungseigenschaften zu modifizieren.

Weitere bei Pulverlacken übliche Zusatzstoffe sind Verlaufmittel, Lichtstabilisatoren, und Entgasungsmittel. Diese können in 0 - 5 Gew.-% verwendet werden. Außerdem möglich ist der Einsatz von Pigmenten und Füllern, z.B. Metalloxide wie Titandioxid, und Metallhydroxide, Sulfate, Sulfide, Carbonate, Silicate, Talkum, Ruß usw. in Gewichtsanteilen von 0 - 30%.

Zur Herstellung der gebrauchsfertigen Pulverlackzusammensetzung werden die Einsatzstoffe vermischt. Die Homogenisierung der Einsatzstoffe kann in geeigneten Aggregaten, wie z. B. beheizbaren Knetern, vorzugsweise jedoch durch Extrudieren, erfolgen, wobei Temperaturobergrenzen von 120 - 130°C nicht überschritten werden sollten. Die extrudierte Masse wird nach Abkühlen auf Raumtemperatur und nach geeigneter Zerkleinerung zum sprühfertigen Pulver ohne Zusatz von Kühlmitteln vermahlen. Das Auftragen des sprühfertigen Pulvers auf geeignete Substrate kann nach den bekannten Verfahren, wie z. B. durch elektro- oder tribostatisches Pulversprühen, Wirbelsintern oder elektrostatisches Wirbelsintern erfolgen.

Gegenstand der Erfindung sind auch Urethangruppen und endständige Acrylatgruppen enthaltende Polymere, bestehend aus
A) 60 - 90 Gew.-% mindestens eines amorphen Urethanacrylats
   und
B) 10 - 40 Gew.-% mindestens eines kristallinen Urethanacrylats,
wobei der Tg der Mischung aus A und B mindestens 35°C beträgt;
das amorphe Urethanacrylat A durch Reaktion der folgenden Komponenten aufgebaut ist:
A1) mindestens ein amorpher hydroxylgruppenhaltiger Polyester mit einem Tg von 35 - 80°C,
A2) mindestens ein Polyisocyanat,
A3) mindestens eine Verbindung mit mindestens einer Alkoholgruppe und mindestens einer polymerisationsfähigen Acrylatgruppe,
und
das kristalline Urethanacrylat B durch Reaktion der folgenden Komponenten aufgebaut ist:
B1) mindestens ein kristalliner hydroxylgruppenhaltiger Polyester,
B2) mindestens ein Polyisocyanat,
B3) mindestens eine Verbindung mit mindestens einer Alkoholgruppe und mindestens einer polymerisationsfähigen Acrylatgruppe einsetzen,
sowie deren Verwendung zur Herstellung von UV-härtbaren Pulverlackzusammensetzungen.

Ein weiterer Gegenstand der Erfindung ist die Verwendung der Pulverlackzusammensetzungen zur Herstellung von Beschichtungen mit hoher oder niedriger Transparenz.

Die Erfindung wird durch die folgenden Beispiele näher erläutert:

### Beispiele:

### 1. Allgemeine Herstellvorschrift hydroxylgruppenhaltiger Polyester

Säurekomponenten und Alkoholkomponenten werden mit 0,2 Massenprozente n-Butylzinntrioctanoat versetzt und in einer mit einer Destillationskolonne versehenen Apparatur unter Stickstoff und Rühren auf 190°C erhitzt. Diese Temperatur wird im Laufe der Wasserabscheidung langsam auf 230°C erhöht. Nachdem etwa 98% der theoretischen Wassermenge abdestilliert worden sind, wird das Produkt abgekühlt und auf OH-Zahl (OHZ in mg KOH/g) und Säure-Zahl (SZ in mg KOH/g) geprüft.
Auf diese Weise wurden drei Polyester hergestellt:
A1: Amorpher Polyester aus IPS 100%, MEG 20% und NPG 80%, OHZ 42 mg KOH/g, Tg 48°C
A2: Amorpher Polyester aus IPS 100%, MEG 20% und DCD 80%, OHZ 40 mg KOH/g, Tg 75°C
B: Kristalliner Polyester aus DDS 100%, MEG 100%, OHZ 31 mg KOH/g, Schmp.: 81°C.
DDS: Dodecandisäure, IPS: Isophthalsäure, MEG: Monoethylenglykol, NPG: Neopentylglykol, DCD: Dicidol

### 2. Herstellung des amorphen Urethanacrylates A1U

111,2 g des Polyesters A1 (OHZ 42) werden aufgeschmolzen und bei 120°C portionsweise unter kräftigen Rühren zu einer Mischung aus 23,7 g IPDI, 0,3 g IONOL CP und 0,3 g DBTL gegeben. Nach 30 min Reaktion werden zusätzlich 14,9 g Hydroxyethylacrylat zugetropft. Nach weiteren 30 min Rühren liegt der NCO-Gehalt unter 0,1% und die heiße Reaktionsmischung wird aus dem Kolben auf eine Folie gegossen. Sobald die Reaktionsmasse erstarrt und abgekühlt ist, wird sie mechanisch zerkleinert und gemahlen. Der TG dieses Produktes beträgt 41°C.

### 3. Herstellung des amorphen Urethanacrylates A2U

37,7 g des Polyesters A2 (OHZ 40) werden aufgeschmolzen und bei 140°C portionsweise unter kräftigen Rühren zu einer Mischung aus 7,5 g IPDI, 0,1 g IONOL CP und 0,1 g DBTL gegeben. Nach 30 min Reaktion werden zusätzlich 4,7 g Hydroxyethylacrylat zugetropft. Nach weiteren 30 min Rühren liegt der NCO-Gehalt unter 0,1% und die heiße Reaktionsmischung wird aus dem Kolben auf eine Folie gegossen. Sobald die Reaktionsmasse erstarrt und abgekühlt ist, wird sie mechanisch zerkleinert und gemahlen. Der TG dieses Produktes beträgt 62°C.

### 4. Herstellung des kristallinen Urethanacrylates BU

103,8 g des Polyesters B (OH-Zahl 31) werden aufgeschmolzen und bei 90°C portionsweise unter kräftigen Rühren zu einer Mischung aus 16,1 g IPDI, 0,1 g IONOL CP und 0,1 g DBTL gegeben. Nach 30 min Reaktion werden zusätzlich 10,1 g Hydroxyethylacrylat zugetropft. Nach weiteren 30 min Rühren liegt der NCO-Gehalt unter 0,1% und die heiße Reaktionsmischung wird aus dem Kolben auf eine Folie gegossen. Sobald die Reaktionsmasse erstarrt und abgekühlt ist, wird sie mechanisch zerkleinert und gemahlen. Der Schmelzpunkt dieses Produktes beträgt 80°C.

### 5. Herstellung der erfindungsgemäßen Polymere und Pulverlackzusammensetzungen und der Vergleichsversuche

Die drei Bestandteile A1U, A2U und BU werden im entsprechenden Gewichtsverhältnis gemischt und 100 Teile dieser Mischung mit 2 Teilen des Photoinitiators IRGACURE 184 (Photoinitiator, Ciba), 0,5 Teilen BYK 361 (Verlaufmittel, BYK Chemie), 0,5 Teilen Benzoin (Entgasungsmittel, Aldrich) und 1 Teil EBECRYL 170 (Haftvermittler, UCB) versetzt. Die zerkleinerten Einsatzstoffe werden in einem Kollergang innig vermischt und anschließend im Extruder bis maximal 130°C homogenisiert Nach dem Erkalten wird das Extrudat gebrochen und mit einer Stiftsmühle im Falle der Vergleichsversuche mit und im Falle des erfindungsgemäßen Beispiels ohne Zusatz von Kühlmitteln (flüssiger Stickstoff oder Trockeneis) auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert. Dann wird unter IR-Bestrahlung aufgeschmolzen und unter UV Licht (Quecksilber-Mitteldruck-Lampe, 120 W/cm, 5 m/min) ausgehärtet.

Für das Vergleichsbeispiel Z wurde die folgende Rezeptur eingesetzt:
300 g UVECOAT 2100 (UCB)
86 g UVECOAT 9010 (UCB)
8 g IRGACURE 184 (CIBA)
4 g RESIFLOW PV 5 (Worlée)
2 g WORLEE Add 900 (Worlée)

Die Prüfwerte sind in der Tabelle 1 zusammengefaßt:

**Tabelle 1**

| *Versuch* | *A1U* | *A2U* | *BU* | *Gesamt Tg [°C]* | *Mahlbar ohne K*^{*1*} | *HK*^{*2*} *[sec]* | *ET*^{*3*} *[mm]* | *KS*^{*4*} *[in*lb]* | *LS*^{*5*} |
|---|---|---|---|---|---|---|---|---|---|
| 1 | 56 | 24 | 20 | 43 | Ja | 176 | 6,5 | >80 | >7d |
| Vgl. X | | | 100 | -80 | Nein | 70 | >10 | >80 | <1d |
| Vgl. Y | 80 | | 20 | 32 | Nein | 135 | 10 | >80 | 1d |
| Vgl. Z | | | | | Nein | 88 | 6,4 | 50 | |

| | | | | | | | | | |
|---|---|---|---|---|---|---|---|---|---|
| 1: Mahlbarkeit ohne Einsatz von Kühlmittel | | | | | | | | | |
| 2: Härte nach König (DIN 53 157) | | | | | | | | | |
| 3: Erichsentiefung (DIN 53 156) | | | | | | | | | |
| 4: Kugelschlag direkt (DIN EN ISO 6272) | | | | | | | | | |
| 5: Lagerstabilität bei 35 °C (Prüfung auf Blockfestigkeit des Pulvers) | | | | | | | | | |

Lediglich der erfindungsgemäße Versuch 1 ist mahlbar ohne Zusatz von Kühlmittel und zeigt außerdem in der Beschichtung gleichzeitig hohe Härte, Flexibilität und Lagerstabilität. Alle nicht erfindungsgemäßen Vergleichsbeispiele (Vgl. X,Y und Z) weisen in mindestens einem dieser Punkte Nachteile auf.

## Patentansprüche

1. UV-härtbare Pulverlackzusammensetzung enthaltend
I. ein Bindemittel bestehend aus
A) 60 - 90 Gew.-% mindestens eines amorphen Urethanacrylats und
B) 10 - 40 Gew.-% mindestens eines kristallinen Urethanacrylats, wobei der Tg der Mischung aus A und B mindestens 35°C beträgt; und
II. Hilfs- und Zusatzstoffe.

2. UV-härtbare Pulverlackzusammensetzung nach Anspruch 1,
**dadurch gekennzeichnet,**
**dass** das amorphe Urethanacrylat A durch Reaktion der folgenden Komponenten aufgebaut ist:
A1) mindestens ein amorpher hydroxylgruppenhaltiger Polyester mit einem Tg von 35 - 80°C,
A2) mindestens ein Polyisocyanat,
A3) mindestens eine Verbindung mit mindestens einer Alkoholgruppe und mindestens einer polymerisationsfähigen Acrylatgruppe.

3. UV-härtbare Pulverlackzusammensetzung nach Anspruch 2,
**dadurch gekennzeichnet,**
**dass** der Polyester A1 aufgebaut ist aus mindestens einer monomeren Dicarbonsäure, ausgewählt aus Isophthalsäure und Hexahydroterephthalsäure
und
mindestens einem monomeren Polyol, ausgewählt aus Monoethylenglykol, Butandiol, Hexandiol, Neopentylglykol, Dicidol, Cyclohexandimethanol, Trimethylolpropan und Glycerin.

4. UV-härtbare Pulverlackzusammensetzung nach mindestens einem der Ansprüche 2 bis 3,
**dadurch gekennzeichnet,**
**dass** als Polyisocyanat A2 Isophorondiisocyanat, Hexamethylendiisocyanat, Trimethylhexamethylendiisocyanat, Dicyclohexylmethyldiisocyanat oder 2,2,6-Trimethyl-1,4-diisocyanatocyclohexan, Norbomandiisocyanat allein oder in Mischungen oder Folgeprodukte dieser Diisocyanate, wie Isocyanurate, Allophanate oder Biurete, eingesetzt wird.

5. UV-härtbare Pulverlackzusammensetzung nach mindestens einem der Ansprüche 2 bis 4,
**dadurch gekennzeichnet,**
**dass** als Komponente A3 Hydroxyethylacrylat eingesetzt wird.

6. UV-härtbare Pulverlackzusammensetzung nach mindestens einem der Ansprüche 1 bis 5,
**dadurch gekennzeichnet,**
**dass** das kristalline Urethanacrylat B durch Reaktion der folgenden Komponenten aufgebaut ist:
B1) mindestens ein kristalliner hydroxylgruppenhaltiger Polyester,
B2) mindestens ein Polyisocyanat,
B3) mindestens eine Verbindung mit mindestens einer Alkoholgruppe und mindestens einer polymerisationsfähigen Acrylatgruppe.

7. UV-härtbare Pulverlackzusammensetzung nach Anspruch 6,
**dadurch gekennzeichnet,**
**dass** der Polyester B1 aufgebaut ist aus mindestens einer monomeren Dicarbonsäure, ausgewählt aus Dodecandisäure, Adipinsäure, Bernsteinsäure und Sebacinsäure
und
mindestens einem monomeren Polyol, ausgewählt aus Monoethylenglykol, Butandiol, Hexandiol, Glycerin und Trimethylolpropan.

8. UV-härtbare Pulverlackzusammensetzung nach mindestens einem der Ansprüche 6 bis 7,
**dadurch gekennzeichnet,**
**dass** als Polyisocyanat B2 Isophorondiisocyanat, Hexamethylendiisocyanat, Trimethylhexamethylendiisocyanat, Dicyclohexylmethyldiisocyanat oder 2,2,6-Trimethyl-1,4-diisocyanatocyclohexan, Norbornandiisocyanat allein oder in Mischungen oder Folgeprodukte dieser Diisocyanate, wie Isocyanurate, Allophanate oder Biurete, eingesetzt wird.

9. UV-härtbare Pulverlackzusammensetzung nach mindestens einem der Ansprüche 6 bis 8,
**dadurch gekennzeichnet,**
**dass** als Komponente B3 Hydroxyethylacrylat eingesetzt wird.

10. UV-härtbare Pulverlackzusammensetzung nach mindestens einem der Ansprüche 1 bis 9,
**dadurch gekennzeichnet,**
**dass** als Hilfs- und Zusatzstoffe UV-Initiatoren, Verlaufmittel, Lichtstabilisatoren, Entgasungsmittel, Pigmente, Füllstoffe, Haftvermittler oder weitere acrylat- und/oder methacrylathaltige Verbindungen enthalten sind.

11. Urethangruppen und endständige Acrylatgruppen enthaltende Polymere, bestehend aus
A) 60 - 90 Gew.-% mindestens eines amorphen Urethanacrylats
und
B) 10 - 40 Gew.-% mindestens eines kristallinen Urethanacrylats,
wobei der Tg der Mischung aus A und B mindestens 35°C beträgt;
das amorphe Urethanacrylat A durch Reaktion der folgenden Komponenten aufgebaut ist:
A1) mindestens ein amorpher hydroxylgruppenhaltiger Polyester mit einem Tg von 35 - 80°C,
A2) mindestens ein Polyisocyanat,
A3) mindestens eine Verbindung mit mindestens einer Alkoholgruppe und mindestens einer polymerisationsfähigen Acrylatgruppe,
und
das kristalline Urethanacrylat B durch Reaktion der folgenden Komponenten aufgebaut ist:
B1) mindestens ein kristalliner hydroxylgruppenhaltiger Polyester,
B2) mindestens ein Polyisocyanat,
B3) mindestens eine Verbindung mit mindestens einer Alkoholgruppe und mindestens einer polymerisationsfähigen Acrylatgruppe.

12. Verwendung der Polymere nach Anspruch 11 zur Herstellung von UV-härtbaren Pulverlackzusammensetzungen.

13. Verwendung der Pulverlackzusammensetzungen nach mindestens einem der Ansprüche 1 bis 10 zur Herstellung von Beschichtungen mit hoher oder niedriger Transparenz.

## Claims

1. A UV curable powder coating composition comprising
I. a binder consisting of
A) 60 - 90% by weight of at least one amorphous urethane acrylate and
B) 10 - 40% by weight of at least one crystalline urethane acrylate,
subject to the proviso that the Tg of the mixture of A and B is at least 35°C;
and
II. auxiliary and additive materials.

2. A UV curable powder coating composition according to claim 1, **characterized in that** said amorphous urethane acrylate A is formed by reaction of the following components:
A1) at least one amorphous hydroxyl-containing polyester having a Tg of 35 - 80°C,
A2) at least one polyisocyanate,
A3) at least one compound having at least one alcohol group and at least one polymerization capable acrylate group.

3. A UV curable powder coating composition according to claim 2, **characterized in that** said polyester A1 is polymerized from at least one monomeric dicarboxylic acid selected from isophthalic acid and hexahydroterephthalic acid and
at least one monomeric polyol selected from monoethylene glycol, butanediol, hexanediol, neopentylglycol, dicidol, cyclohexanedimethanol, trimethylolpropane and glycerol.

4. A UV curable powder coating composition according to at least one of claims 2 to 3, **characterized in that** said polyisocyanate A2 is isophorone diisocyanate, hexamethylene diisocyanate, trimethylhexamethylene diisocyanate, dicyclohexylmethyl diisocyanate or 2,2,6-trimethyl-1,4-diisocyanatocyclohexane, norbornane diisocyanate used alone or in mixtures or a derivative of these diisocyanates, such as an isocyanurate, an allophanate or a biuret.

5. A UV curable powder coating composition according to at least one of claims 2 to 4, **characterized in that** said component A3 is hydroxyethyl acrylate.

6. A UV curable powder coating composition according to at least one of claims 1 to 5, **characterized in that** said crystalline urethane acrylate B is formed by reaction of the following components:
B1) at least one crystalline hydroxyl-containing polyester,
B2) at least one polyisocyanate,
B3) at least one compound having at least one alcohol group and at least one polymerization capable acrylate group.

7. A UV curable powder coating composition according to claim 6, **characterized in that** said polyester B1 is polymerized from at least one monomeric dicarboxylic acid selected from dodecanoic acid, adipic acid, succinic acid and sebacic acid
and
at least one monomeric polyol selected from monoethylene glycol, butanediol, hexanediol, glycerol and trimethylolpropane.

8. A UV curable powder coating composition according to at least one of claims 6 and 7, **characterized in that** said polyisocyanate B2 is isophorone diisocyanate, hexamethylene diisocyanate, trimethylhexamethylene diisocyanate, dicyclohexylmethyl diisocyanate or 2,2,6-trimethyl-1,4-diisocyanatocyclohexane, norbornane diisocyanate used alone or in mixtures or a derivative of these diisocyanates, such as an isocyanurate, an allophanate or a biuret.

9. A UV curable powder coating composition according to at least one of claims 6 to 8, **characterized in that** said component B3 is hydroxyethyl acrylate.

10. A UV curable powder coating composition according to at least one of claims 1 to 9, **characterized in that** auxiliary and additive materials present comprise UV initiators, flow agents, light stabilizers, degassing agents, pigments, fillers, adhesion promoters or further acrylate- and/or methacrylate-containing compounds.

11. A polymer containing urethane groups and terminal acrylate groups, consisting of
A) 60 - 90% by weight of at least one amorphous urethane acrylate
and
B) 10 - 40% by weight of at least one crystalline urethane acrylate,
subject to the provisos that the Tg of the mixture of A and B is at least 35°C;
said amorphous urethane acrylate A is formed by reaction of the following components:
A1) at least one amorphous hydroxyl-containing polyester having a Tg of 35 to 80°C,
A2) at least one polyisocyanate,
A3) at least one compound having at least one alcohol group and at least one polymerization capable acrylate group,
and
said crystalline urethane acrylate B is formed by reaction of the following components:
B1) at least one crystalline hydroxyl-containing polyester,
B2) at least one polyisocyanate,
B3) at least one compound having at least one alcohol group and at least one polymerization capable acrylate group.

12. The use of the polymer according to claim 11 for producing UV curable powder coating compositions.

13. The use of the powder coating composition according to at least one of claims 1 to 10 for producing coatings of high or low transparency.

## Revendications

1. Composition de laque en poudre durcissant sous l'action des UV, contenant:
(I) un liant constitué de
A) 60 - 90 % en poids d'au moins un acrylate d'uréthane amorphe et
B) 10 - 40 % en poids d'au moins un acrylate d'uréthane cristallin, la Tg du mélange de A et B étant au moins de 35 °C, et
(II) II. des adjuvants et additifs.

2. Composition de laque en poudre, durcissant sous l'action des UV, selon la revendication 1,
**caractérisée en ce que**
l'acrylate d'uréthane amorphe A est élaboré par réaction des composants suivants :
A1) au moins un polyester contenant des groupes hydroxyle, amorphe, d'une Tg de 35 - 80 °C,
A2) au moins un polyisocyanate,
A3) au moins une combinaison comportant au moins un groupe alcool et au moins un groupe acrylate polymérisable.

3. Composition de laque en poudre, durcissant sous l'action des UV selon la revendication 2,
**caractérisée en ce que**
le polymère A1 est élaboré à partir d'au moins un acide dicarboxylique monomère, choisi parmi l'acide isophthalique et l'acide hexahydrotéréphthalique,
et d'au moins un polyol monomère, choisi parmi le monoéthylèneglycol, le butanediol, l'hexanediol, le néopentylglycol, le dicidol, le cyclohexanediméthanol, le triméthylolpropane et la glycérine.

4. Composition de laque en poudre, durcissant sous l'action des UV, selon au moins l'une des revendications 2 à 3,
**caractérisée en ce que**
comme polyisocyanate A2 on utilise, le diisocyanate d'isophorone, le diisocyanate d'hexaméthylène, le diisocyanate de triméthylhexaméthylène, le diisocyanate de dicyclohexylméthyle ou le 2.2.6-triméthyl-1,4-diisocyanatocyclohexane, le diisocyanate de norbornane, seuls ou en mélanges, ou des dérivés de ces diisocyanates, comme les isocyanurates, allophanates ou biurets.

5. Composition de laque en poudre, durcissant sous l'action des UV selon au moins l'une des revendications 2 à 4,
**caractérisée en ce que**
comme composant A3 on utilise l'acrylate d'hydroxyéthyle.

6. Composition de laque en poudre durcissant sous l'action des UV selon au moins l'une des revendications 1 à 5,
**caractérisée en ce que**
l'acrylate d'uréthane cristallin B est élaboré par réaction des composants suivants :
B1) au moins un polyester contenant des groupes hydroxyle, cristallin,
B2) au moins un polyisocyanate,
B3) au moins un composé comportant au moins un groupe alcool et au moins un groupe acrylate polymérisable.

7. Composition de laque en poudre, durcissant sous l'action des UV selon la revendication 6,
**caractérisée en ce que**
le polyester B1 est élaboré à partir d'au moins un acide dicarboxylique monomère, choisi parmi l'acide dodécanedioique, l'acide adipique, l'acide succinique et l'acide sébacique,
et d'au moins un polyol monomère. choisi parmi le monoéthylèneglycol, le butanediol, l'hexanediol, la glycérine et le triméthylolpropane.

8. Composition de laque en poudre, durcissant sous l'action des UV selon au moins l'une des revendications 6 à 7,
**caractérisée en ce que**
comme polyisocyanate A2, on utilise le diisocyanate d'isophorone, le diisocyanate d'hexaméthylène, le diisocyanate de triméthylhexaméthylène, le diisocyanate de dicyclohexylméthyle ou le 2,2,6-triméthyl-1,4-diisocyanatocyclohexane, le diisocyanate de norbornane, seuls ou en mélanges, ou des dérivés de ces diisocyanates comme les isocyanurates, allophanates ou biurets.

9. Composition de laque en poudre durcissant sous l'action des UV, selon au moins l'une des revendications 6 à 8,
**caractérisée en ce que**
comme composant B3, on utilise l'acrylate d'hydroxyéthyle.

10. Composition de laque en poudre durcissant sous l'action des UV selon au moins l'une des revendications 1 à 9,
**caractérisée en ce que**
comme adjuvants et additifs, elle contient des initiateurs - UV, des agents d'étalement, des photo-stabilisants, des agents de dégazage, des pigments, des charges, des agents d'adhérence ou d'autres composés contenant des acrylates et/ou des méthacrylates.

11. Polymères contenant des groupes uréthane et des groupes acrylate en extrémité, constitués de :
A) 60 - 90 % en poids d'au moins un acrylate d'uréthane amorphe et
B) 10 - 40 % en poids d'au moins un acrylate d'uréthane cristallin, la Tg du mélange de A et B étant au moins de 35 °C,
l'acrylate d'uréthane amorphe A étant élaboré par réaction des composants suivants :
A1) au moins un polyester contenant des groupes hydroxyle, amorphe, présentant une Tg de 35 - 80 °C,
A2) au moins un polyisocyanate.
A3) au moins un composé comportant au moins un groupe alcool et au moins un groupe acrylate polymérisable,
et
l'acrylate d'uréthane cristallin B étant élaboré par réaction des composants suivants:
B1) au moins un polyester contenant des groupes hydroxyle, cristallin.
B2) au moins un polyisocyanate,
B3) au moins un composé comportant au moins un groupe alcool et au moins un groupe acrylate polymérisable.

12. Utilisation de polymères selon la revendication 11, pour la préparation de compositions de laque en poudre durcissant sous l'action des UV.

13. Utilisation des compositions de laque en poudre selon au moins l'une des revendications 1 à 10, pour la réalisation de revêtements à transparence élevée ou faible.
